# DEMANDE DE BREVET EUROPEEN

(11) **EP 0 557 181 A1**
(43) Date de publication de la demande: **25.08.1993**
(21) Numéro de dépôt: 93400381.5
(22) Date de dépôt: 16.02.1993
(51) Int. Cl.: B64C 25/58, F16F 9/06

(54) **Amortisseur de descente de train d'atterrissage d'avion**

(30) Priorité: 21.02.1992 FR 9202016
(71) Demandeur: MESSIER BUGATTI, F-78140 Velizy Villacoublay (FR)
(72) Inventeur: Derrien, Michel, F-78000 Versailles (FR)
(74) Mandataire: Jaunez, Xavier

(57) **Abrégé**

L'invention concerne un amortisseur comportant un corps principal et une tige-piston, dont la tige-piston est rentrée en position train bas et sortie en position train haut.

Conformément à l'invention, le corps principal (101) comporte successivement trois chambres (127, 108, 109), séparées par des cloisons associées, dont une première chambre hydraulique (127) dans laquelle coulisse librement la tige-piston (103), une chambre (108) dans laquelle coulisse un piston séparateur (110) délimitant une deuxième chambre hydraulique (108.1), et une chambre (109) dans laquelle coulisse un autre piston séparateur (111) délimitant une troisième chambre hydraulique (109.1) et une chambre (109.2) de fluide gazeux à haute pression ; des moyens de communication (150) sont prévus entre ces chambres (127, 108.1, 109.1), avec deux électro-vannes associées (151, 152) permettant d'établir sélectivement la liaison fluidique correspondante. Ainsi, en régime normal, l'amortisseur permet d'emmagasiner à la descente du train une certaine énergie qui est réutilisée lors du relevage suivant, et, lors du régime de secours, l'amortisseur participe au freinage pour la descente secours du train.

## Description

L'invention concerne les amortisseurs de descente de trains d'atterrissage d'avions, et plus spécialement les amortisseurs -de descente de trains relevables du type comportant un corps principal et une tige-piston, avec un agencement entre un point du train d'atterrissage et un point fixe de la structure d'avion qui soit tel que la tige-piston soit rentrée en position train bas, et sortie en position train haut.

De tels amortisseurs sont donc destinés à intervenir lors de la descente du train d'atterrissage, lorsque l'actionneur linéaire associé à la jambe de train est enclenché.

Lorsque la manoeuvre de descente du train d'atterrissage par l'actionneur linéaire associé, en particulier par un actionneur électro-mécanique, s'effectue normalement, l'actionneur assure naturellement le freinage de la descente du train.

Par contre, en cas de panne mécanique localisée ou de panne générale de la génération de l'avion, l'actionneur est débrayé et ne procure donc plus la résistance qui était disponible en fonctionnement normal. Dans une telle situation, la descente secours du train doit quand même pouvoir être effectuée sans détérioration des organes constitutifs de ce train, c'est-à-dire qu'il apparaît nécessaire de pouvoir faire alors intervenir un moyen capable d'assurer le freinage qui fait défaut, et ce surtout en fin de course de descente du train.

L'invention a précisément pour objet de résoudre ce problème, en concevant un amortisseur dont la structure permette une intervention immédiate et efficace en cas de descente secours du train d'atterrissage.

L'invention a ainsi pour objet de réaliser un amortisseur qui soit capable de présenter deux régimes de fonctionnement possibles, dont un régime normal, et un régime de secours dans lequel ledit amortisseur agit comme un frein de descente, et ce en toute sécurité, même en cas de panne de la génération de l'avion.

L'invention a aussi pour objet de réaliser un amortisseur dont le comportement soit favorable lors du fonctionnement normal de l'actionneur linéaire assurant la manoeuvre du train.

L'invention a enfin pour objet de concevoir un amortisseur dont la structure soit simple, et dont les organes de commande soient aisément accessibles pour faciliter les opérations de maintenance.

Il s'agit plus particulièrement d'un amortisseur de descente de train d'atterrissage d'avion, comportant un corps principal et une tige-piston, ledit amortisseur étant agencé entre un point du train d'atterrissage et un point fixe de la structure d'avion de telle façon que la tige-piston soit rentrée en position train bas et sortie en position train haut, caractérisé par le fait que le corps principal comporte successivement trois chambres séparées par des cloisons intermédiaires associées dudit corps, dont une première chambre de fluide hydraulique dans laquelle coulisse librement la tige-piston, une chambre adjacente à ladite première chambre, dans laquelle coulisse un premier piston séparateur délimitant une deuxième chambre de fluide hydraulique et une chambre reliée à l'atmosphère, et une dernière chambre dans laquelle coulisse un deuxième piston séparateur délimitant une troisième chambre de fluide hydraulique et une chambre de fluide gazeux à haute pression, ledit premier piston séparateur présentant une tige axiale qui pénètre dans ladite chambre de fluide gazeux en traversant ledit deuxième piston séparateur, et par le fait que ledit amortisseur comporte en outre des moyens de communication entre la première chambre de fluide hydraulique et chacune des deuxième et troisième chambres de fluide hydraulique, avec deux électro-vannes associées permettant d'établir sélectivement la liaison fluidique avec l'une ou l'autre desdites deuxième et troisième chambres, de façon à obtenir deux régimes de fonctionnement pour l'amortisseur, dont un régime normal dans lequel le deuxième piston séparateur intervient seul et permet d'emmagasiner, à la descente du train, une certaine énergie qui est réutilisable lors du relevage subséquent dudit train, et un régime de secours dans lequel le premier piston séparateur intervient seul et participe au freinage pour la descente secours du train.

De préférence, les premier et deuxième pistons séparateurs sont, en position de repos, en appui, par l'intermédiaire de saillies d'espacement, sur la cloison intermédiaire correspondante du corps principal.

Avantageusement encore, les moyens de communication comportent une canalisation reliant un orifice d'extrémité de la première chambre de fluide hydraulique à un orifice d'extrémité de la troisième chambre de fluide hydraulique, lesdits orifices débouchant au voisinage des cloisons intermédiaires du corps principal, et une première électrovanne associée qui est ouverte lors du régime normal de fonctionnement dudit amortisseur, l'autre électro-vanne étant alors fermée.

Il est également intéressant que les moyens de communication comportent en outre une canalisation reliant au moins un orifice d'extrémité de la première chambre de fluide hydraulique à un orifice d'extrémité de la deuxième chambre de fluide hydraulique, lesdits orifices débouchant au voisinage de la cloison intermédiaire correspondante du corps principal, et une deuxième électro-vanne qui est ouverte lors du régime de secours dudit amortisseur, l'autre électro-vanne étant alors fermée.

Avantageusement alors, la canalisation précitée est associée à deux orifices étagés de la première chambre de fluide hydraulique, celui desdits orifices qui est le plus proche de la cloison intermédiaire étant associé à un diaphragme d'amortissement de fin de course pour le freinage final de la descente secours du train.

De préférence encore, les moyens de communication sont agencés à l'extérieur du corps principal. L'accessibilité s'en trouve ainsi facilitée pour les opérations de maintenance effectuées au sol.

Avantageusement aussi, la tige-piston est creuse, et son guidage axial est assuré par un collet glissant associé à la portion piston de ladite tige-piston, ladite portion piston présentant des perçages axiaux assurant le libre passage du fluide hydraulique de part et d'autre de celle-ci.

Il est également intéressant que l'amortisseur soit articulé par sa tige-piston sur le train d'atterrissage, et par son corps principal sur le point fixe de la structure d'avion.

D'autres caractéristiques et avantages de l'invention apparaîtront plus clairement à la lumière de la description qui va suivre et du dessin annexé, concernant un mode de réalisation particulier, en référence aux figures où :
- la figure 1 illustre un train d'atterrissage particulier, en position train bas, équipé d'un amortisseur conforme à l'invention, dont la tige-piston est alors rentrée;
- la figure 2 est une coupe axiale de cet amortisseur, en position tige sortie, position qui est occupée lorsque le train est en position relevée.

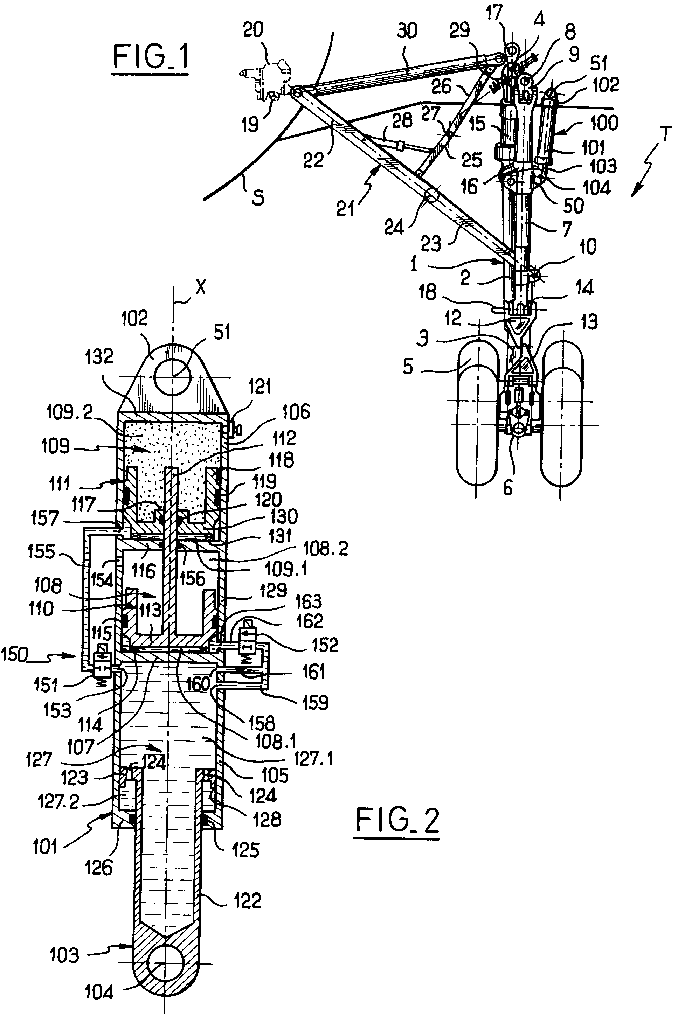

La figure 1 illustre un train d'atterrissage particulier T, en position train bas, équipé d'un amortisseur 100 conforme à l'invention. Le train d'atterrissage qui est représenté ne constitue naturellement qu'un exemple possible, et il reste entendu que l'amortisseur faisant l'objet de l'invention pourra équiper d'autres types de trains relevables. La représentation donnée en figure 1 permet cependant de mieux comprendre l'environnement de l'amortisseur conforme à l'invention, et en particulier sa disposition par rapport au train d'atterrissage et à la structure de l'avion.

Le train d'atterrissage T, de type relevable, comporte un amortisseur principal 1, qui est constitué par un caisson d'amortisseur 2 et une tige 3 coulissant dans ledit caisson, coaxialement à celui-ci. Le caisson 2 est articulé supérieurement (en 4) sur la structure S de l'avion, l'axe d'articulation passant par l'extrémité d'une branche de liaison 8 solidaire dudit caisson. Un élément de contreventement 7 est associé à l'amortisseur principal 1, en étant d'une part relié, par une articulation tournante 9, à l'extrémité de la branche de liaison précitée 8, et d'autre part articulé en 14 sur un appendice inférieur du caisson d'amortisseur 2. Un compas formé de deux bras 12 et 13 est par ailleurs articulé en 14 sur le caisson d'amortisseur 2, et en partie inférieure de la tige coulissante 3. Un actionneur linéaire 15 assure le relevage ou l'abaissement du train d'atterrissage T, le corps de ce vérin étant articulé sur un appendice médian 16 de l'élément de contreventement 7, tandis que la tige dudit vérin est articulée par son extrémité 17 sur la structure d'avion. On distingue également un galet 18 agencé en extrémité d'un appendice prévu en partie basse du caisson 2, ledit galet coopérant, lorsque le train est relevé, avec le crochet 19 d'un boîtier d'accrochage 2O logé dans la structure d'avion.

Le train d'atterrissage T de la figure 1 est en outre équipé d'une contre-fiche articulée 21 à double alignement, avec un alignement principal reliant le caisson d'amortisseur 2 (au niveau de l'articulation 1O précitée) à la structure d'avion S (au niveau d'une articulation qui est en outre associée à une bielle de liaison 3O), et il est formé d'un bras supérieur 22 et d'un bras inférieur 23 articulés entre eux au niveau d'une articulation 24. L'alignement secondaire de cette contre-fiche articulée 21 relie quant à lui le bras 22 de l'alignement principal à la structure d'avion, en étant formé d'un bras inférieur 25 et d'un bras supérieur 26 articulés entre eux au niveau d'une articulation 27. On distingue également un ressort de traction 29 associé au bras supérieur 26 de l'alignement secondaire, ledit ressort participant au déploiement de cet alignement. On distingue enfin un petit vérin 28 associé au déverrouillage de la contre-fiche articulée, ledit vérin étant agencé pour briser l'alignement secondaire et par suite l'alignement principal lors du relevage du train.

Le train d'atterrissage T qui vient d'être décrit est équipé d'un amortisseur 1OO conforme à l'invention, comportant un corps principal 1O1 et une tige-piston 1O3 coulissant dans ce corps principal. En l'espèce, l'amortisseur 1OO est articulé, en 104, sur un appendice 5O de l'élément de contreventement 7, et par son corps principal 1O1, ou plus précisément par des goussets d'extrémité 102 de celui-ci, sur un point fixe 51 de la structure d'avion S. D'autres agencements peuvent naturellement être envisagée, à condition que l'amortisseur soit agencé entre un point du train d'atterrissage et un point fixe de la structure d'avion de telle façon que la tige-piston 1O3 soit rentrée en position train bas, et sortie en position train haut.

On va maintenant décrire plus en détail la structure de l'amortisseur 1OO conforme à l'invention, en se référant à la coupe axiale de la figure 2.

L'amortisseur 100 comporte ainsi un corps principal 101 dans lequel coulisse librement une tige-piston 103 traversant le fond 126 du corps principal 101, cette tige-piston étant ici creuse, et présentant une portion tige 122 et une portion piston 123. L'étanchéité au niveau de la traversée du fond 126 du corps principal est assurée par un joint 125, tandis que, pour la portion piston 123, la partie 128 prévue en périphérie de celle-ci est un collet glissant assurant le guidage axial de la tige-piston 103 selon l'axe X du corps principal 101. La portion piston 123 présente en outre au moins un perçage axial 124 (on en voit deux sur la figure) assurant le libre passage du fluide hydraulique de part et d'autre de celle-ci, sans laminage dudit fluide lors du mouvement de la tige-piston 103.

Dans la suite de la description, on se référera pour plus de commodité à des organes "supérieur" ou "inférieur", conformément à l'orientation verticale représentée en figure 2, mais il va de soi qu'avec d'autres orientations de l'amortisseur, les qualificatifs précités ne conviennent plus.

Le corps principal 101 est constitué par une portion inférieure 105 et une portion médiane 129, séparées entre elles par une cloison pleine intermédiaire 107, puis une portion supérieure 106 qui est séparée de la portion médiane 129 par une autre cloison intermédiaire 116 qui présente un perçage central pour le passage d'une tige de piston 112, l'étanchéité au niveau de ce passage étant assurée par un joint 156.

Le corps principal 101 comporte ainsi successivement trois chambres 127, 108, 109 séparées entre elles par les cloisons intermédiaires précitées 107, 116.

On trouve tout d'abord une première chambre 127 dans laquelle coulisse librement la tige-piston 103. Cette première chambre est occupée par du fluide hydraulique, aussi bien d'un côté que de l'autre de la portion piston 123. Les perçages axiaux 124 garantissent l'équipression de part et d'autre de la portion piston 123, pour la portion supérieure de pleine section 127.1 et la portion inférieure annulaire 127.2.

On trouve ensuite une deuxième chambre 108, délimitée par les deux cloisons intermédiaire 107 et 116, chambre dans laquelle coulisse un premier piston séparateur 110, qui délimite une deuxième chambre de fluide hydraulique 108.1 et une chambre 108.2 qui est ouverte à l'extérieur, grâce à un orifice 154 prévu à cet effet dans la paroi de la portion intermédiaire 129 du corps principal 101. Du fait de l'ouverture de la chambre 108.2 à l'extérieur par l'orifice associé 154, on pourra avantageusement prévoir un chromage de ladite chambre pour éviter la corrosion. Le premier piston 110 comporte un fond 113 duquel partent la tige centrale 112 et la portion latérale du piston d'un côté, et des saillies d'espacement 114 de l'autre côté. Ce premier piston 111 est, en position de repos, en appui sur la paroi 107 par ses saillies d'espacement 114, cette même cloison servant également à limiter la course de la tige-piston 103 dans le sens de la rentrée de celle-ci. L'étanchéité du premier piston 110 coulissant dans le corps principal est assuré par un joint associé 115.

On trouve enfin une dernière chambre 109, délimitée par la cloison intermédiaire 116 et par le fond supérieur 132 du corps principal 101, chambre dans laquelle coulisse un deuxième piston séparateur 111 délimitant une troisième chambre de fluide hydraulique 109.1 et une chambre 109.2 de fluide gazeux à haute pression, par exemple de l'azote.

Ainsi que cela a été dit plus haut, le piston séparateur 110 présente une tige axiale 112, et cette tige axiale traverse la cloison intermédiaire 116, par un joint d'étanchéité associé 156, puis pénètre dans la chambre 109, en traversant le deuxième piston séparateur 111. Le deuxième piston séparateur 111 comporte un fond 130 dont une portion centrale 117 est traversée avec étanchéité grâce à un joint associé 120, par la tige 112 du premier piston 110. Ce deuxième piston 111 comporte, comme le premier piston 110, des saillies d'espacement 131 s'étendant de l'autre côté du fond 130 par rapport à la paroi latérale 118 de ce piston.

Il convient de noter que chacun des deux pistons 110 et 111 comporte, au niveau de son fond, une restriction périphérique permettant de définir un élargissement du volume de la chambre hydraulique associée lorsque le piston concerné est en butée basse, ceci pour favoriser la liaison hydraulique avec la première chambre 127 grâce à des orifices associés. La paroi latérale 118 du second piston 111 comporte par ailleurs un joint 119 garantissant l'étanchéité de la chambre 109.2 occupée par de l'air ou de l'azote sous haute pression, chambre dont le gonflage est assuré par une valve associée du type conventionnel 121.

Il est intéressant de noter également que les joints 115, 120 et 156 précités sont mouillés par le fluide hydraulique, ce qui est avantageux pour la longévité desdits joints.

Les chambres 127, 108.1 et 109.1 qui sont occupées par du fluide hydraulique seront dénommées ci-après chambres hydrauliques et la chambre 109.2 occupée par du fluide gazeux à haute pression sera dénommée ci-après chambre gazeuse.

L'amortisseur comporte en outre des moyens de communication 150 entre la première chambre hydraulique 127 et chacune des deuxième et troisième chambres hydrauliques 108.1 et 109.1. Ces moyens de communication comportent tout d'abord, pour la liaison entre les chambres hydrauliques 127 et 109.1, une canalisation 155 reliant un orifice d'extrémité 153 de la première chambre hydraulique 127, à un orifice d'extrémité 157 de la troisième chambre hydraulique 109.1. Les orifices 153 et 157 sont dit d'extrémité dans la mesure où ils débouchent au voisinage des cloisons intermédiaires associées 107 et 116, de façon à pouvoir intervenir aux positions extrêmes haute pour la tige-piston 103 et basse pour le deuxième piston séparateur 111. Pour la liaison hydraulique entre la première chambre hydraulique 127 et la deuxième chambre hydraulique 108.1, les moyens de communication comportent une canalisation 162 reliant au moins un orifice d'extrémité de la première chambre hydraulique 127 à un orifice d'extrémité 163 de la deuxième chambre hydraulique 108.1. Le fait de prévoir au moins un orifice d'extrémité, en l'espèce deux orifices étagés 158, 160, permet d'organiser un amortissement de fin de course, ainsi que cela sera décrit plus loin. Comme précédemment, les orifices 158, 160 et 163 sont dit d'extrémité dans la mesure où ils débouchent au voisinage de la cloison intermédiaire correspondante 107 du corps principal 101.

Conformément à un aspect essentiel de l'invention, les moyens de communication 150 comportent deux électrovannes associées 151, 152 permettant d'établir sélectivement la liaison fluidique avec l'une ou l'autre des deuxième et troisième chambres hydrauliques 108.1 et 109.1. Ces électrovannes vont permettre d'obtenir deux régimes de fonctionnement pour l'amortisseur, dont un régime normal dans lequel le deuxième piston séparateur 111 intervient seul et permet d'emmagasiner une certaine énergie qui est réutilisable lors du relevage subséquent dudit train, et un régime de secours dans lequel le premier piston séparateur 110 intervient seul et participe au freinage pour la descente en secours du train.

La première électro-vanne 151 est agencée sur la canalisation 155 et elle est de préférence en position ouverte au repos. La deuxième électro-vanne 152, est quant à elle fermée au repos ; lorsqu'elle est ouverte, elle permet d'assurer la liaison entre la portion de pleine section 127.1 de la première chambre hydraulique 127 et la deuxième chambre hydraulique 108.1. En l'espèce, l'orifice 158 prévu dans la portion inférieure du corps principal 101 mène, par une petite canalisation 159, à cette deuxième électro-vanne 152, en aval de laquelle la canalation 162 mène à l'orifice 163 précité de la portion médiane 106 du corps principal 101. L'autre orifice 160, qui est le plus proche de la cloison intermédiaire 107, est ici associé à un diaphragme 161 d'amortissement de fin de course pour le freinage de la descente en secours du train, ainsi que cela sera décrit plus loin dans le cadre des explications relatives au fonctionnement de l'amortisseur conforme à l'invention. Il convient de noter que l'orifice 158 est relativement proche de la cloison 107, pour établir un passage aussi rapide que possible lors de la rentrée de la tige-piston, l'orifice 160 n'intervenant qu'en fin de course de rentrée de ladite tige-piston, lorsque la portion piston 123 de celle-ci masque l'orifice 158 précité.

On va maintenant décrire en détail le fonctionnement de l'amortisseur 100 dont on vient de décrire les organes structurels en s'attachant tout d'abord à décrire le régime normal de fonctionnement.

Si l'on part d'une position train haut, l'amortisseur 100 est dans la position illustrée en figure 2, avec sa tige-piston 103, en position proche de l'extension maximale. Lorsque le pilote déclenche l'actionneur linéaire associé à la jambe de train pour commander la descente du train, l'électro-vanne 151 est ouverte tandis que l'électro-vanne 152 est fermée. Dans ce cas, la rentrée de la tige-piston 103 expulse du liquide hydraulique hors de la portion de pleine section 127.1 de la première chambre 127 par l'orifice 153, vers la troisième chambre hydraulique 109.1. L'électro-vanne 152 étant quant à elle fermée, la deuxième chambre hydraulique 108.1 ne reçoit aucune quantité de fluide. De ce fait, le premier piston séparateur 110 n'est soumis à aucun effort tendant à le déplacer vers le haut, et il reste en butée basse grâce à la pression du fluide gazeux haute pression à laquelle il est soumis par l'extrémité de sa tige axiale 112. Il n'en va pas de même pour le deuxième piston séparateur 111, qui se dégage sur une certaine course de ses butées d'appui 131, ce qui a pour effet de comprimer le fluide gazeux dans la chambre gazeuse 109.2.

Lorsque l'actionneur linéaire est ensuite commandé pour le relevage du train, avec un repliage de la contrefiche articulée à double alignement dans le cas d'un train d'atterrissage conforme à celui illustré en figure 1, la tige-piston 103 sort à nouveau du corps principal 101. Dans le cadre d'une remontée normale du train, les électrovannes 151 et 152 sont conservées dans la même position que lors de la descente précédemment décrite. La sortie de la tige-piston 103 s'accompagne d'un mouvement de fluide hydraulique hors de la troisième chambre hydraulique 109.1, pour pénétrer dans la portion de pleine section 127.1, ce mouvement fluidique étant assisté par l'action du deuxième piston séparateur 111 soumis à la pression du gaz enfermé dans la chambre gazeuse 109.2, et ce jusqu'à ce que ledit piston redescende en butée basse sur ses appuis 131. De ce fait, l'énergie qui avait été emmagasinée lors de la descente du train, par la compression du fluide gazeux contenu dans la chambre gazeuse 109.2, est alors restituée lors du relevage suivant du train. Ainsi, on obtient un premier régime de fonctionnement pour l'amortisseur 100, avec un régime normal dans lequel le deuxième piston 111 intervient seul et permet d'emmagasiner à la descente du train une certaine énergie qui est utilisée lors du relevage subséquent du train. Dans le cadre de ce fonctionnement normal, la deuxième électrovanne 152 reste donc fermée, et le premier piston séparateur 110 n'intervient pas, et reste, en butée basse par ses appuis 114 contre la cloison intermédiaire 107.

En cas de panne mécanique localisée ou de panne générale de la génération de l'avion, l'actionneur linéaire est débrayé, et ne procure donc plus la résistance qui était disponible en fonctionnement normal. C'est dans cette situation de secours que l'amortisseur selon l'invention va intervenir pour participer au freinage qui fait défaut, et ce surtout en fin de course de descente du train.

Dans une telle situation de panne, un simple contact électrique déclenché par le pilote inverse la position des électro-vannes 151 et 152, de sorte que l'électro-vanne 151 passe en position fermée et l'électro-vanne 152 en position ouverte.

Si l'on part comme précédemment, d'une position train haut, c'est à dire correspondant pour l'amortisseur à celle qui est illustrée en figure 2, la rentrée de la tige-piston 103 expulse un volume de fluide hydraulique de la portion de pleine section 127.1 de la première chambre hydraulique 127 dans la deuxième chambre hydraulique 108.1, la troisième chambre hydraulique 109.1 n'étant quant à elle aucunement alimentée. Le deuxième piston séparateur 111 reste donc en butée basse, tandis que le premier piston séparateur 110 se soulève facilement, dans la mesure où la seule résistance s'opposant à sa course de remontée résulte de la pression exercée par le fluide gazeux sur l'extrémité de sa tige centrale 112. La tige-piston 103 rentre ainsi avec un mouvement contrôlé, ce qui correspond à une phase de freinage de la descente secours du train. Lorsque la portion piston 123 masque l'orifice 158, le fluide hydraulique expulsé ne passe plus que par l'orifice 160, et par suite par le diaphragme 161, ce qui réalise un amortissement de fin de course tout à fait favorable pour la fin de la descente secours du train. En fin de descente secours, le deuxième piston 111 est resté en butée basse, tandis que le premier piston 110 est remonté sur une certaine course, laquelle course est limitée par une butée soit de la paroi latérale du piston contre la cloison 116, soit de la tige axiale dudit piston contre le fond supérieur 132.

On est ainsi parvenu à obtenir un deuxième régime de fonctionnement pour l'amortisseur 100, conformément à un régime de secours dans lequel le premier piston 110 intervient seul et participe au freinage pour la descente secours du train.

Si l'on souhaite remonter le train après une descente secours, en utilisant alors des moyens de sécurité en cas de panne pour suppléer à la fonction normalement assurée par l'actionneur linéaire, l'amortisseur procure une légère assistance aux moyens qui sont déclenchés : en effet, les deux électrovannes 151, 152 sont conservées dans la position qu'elles occupaient lors de la descente secours, et la redescente du premier piston 110, sous l'effet de la pression de gaz qui s'exerce sur la section de sa tige centrale 112 tend à chasser du fluide hydraulique par la deuxième électro-vanne 152 qui est restée ouverte, d'abord par le diaphragme 161, puis par la canalisation normale 159 lorsque l'orifice 158 est découvert. La première électro-vanne 151 est dans cette situation restée fermée, comme pour la descente secours du train.

On est ainsi parvenu à réaliser un amortisseur qui est capable de présenter deux régimes de fonctionnement possible, dont un régime de secours dans lequel ledit amortisseur peut participer au freinage de descente, et ce en toute sécurité même en cas de panne de la génération de l'avion, et un régime de fonctionnement normal dans lequel le comportement de l'amortisseur est favorable à la manoeuvre de l'actionneur linéaire associé au train d'atterrissage. Par ailleurs, conformément à ce qui est illustré en figure 2, les moyens de communication 150 sont agencés à l'extérieur du corps principal 101, de sorte que les organes de commande (électro-vannes 151 et 152) sont aisément accessibles pour faciliter d'éventuelles opérations de maintenance au sol.

La structure de l'amortisseur est en outre simple, et elle permet un gain d'environ 10 % en travail, ce qui permet de minimiser le moteur électrique associé à l'actionneur linéaire du train d'atterrissage, et par suite de diminuer la consommation de courant.

L'invention n'est pas limitée au mode de réalisation qui vient d'être décrit, mais englobe au contraire toute variante reprenant, avec des moyens équivalents, les caractéristiques essentielles énoncées plus haut.

## Revendications

1. Amortisseur de descente de train d'atterrissage d'avion, comportant un corps principal et une tige-piston, ledit amortisseur étant agencé entre un point du train d'atterrissage et un point fixe de la structure d'avion de telle façon que la tige-piston soit rentrée en position train bas et sortie en position train haut, caractérisé par le fait que le corps principal (101) comporte successivement trois chambres (127, 108, 109) séparées par des cloisons intermédiaires associées (107, 116) dudit corps, dont une première chambre de fluide hydraulique (127) dans laquelle coulisse librement la tige-piston (103), une chambre (108) adjacente à ladite première chambre, dans laquelle coulisse un premier piston séparateur (110) délimitant une deuxième chambre de fluide hydraulique (108.1) et une chambre (108.2) reliée à l'atmosphère, et une dernière chambre (109) dans laquelle coulisse un deuxième piston séparateur (111) délimitant une troisième chambre de fluide hydraulique (109.1) et une chambre (109.2) de fluide gazeux à haute pression, ledit premier piston séparateur (110) présentant une tige axiale (112) qui pénètre dans ladite chambre de fluide gazeux (109.2) en traversant ledit deuxième piston séparateur (111), et par le fait que ledit amortisseur comporte en outre des moyens de communication (150) entre la première chambre de fluide hydraulique (127) et chacune des deuxième et troisième chambres de fluide hydraulique (108.1, 109.1), avec deux électro-vannes associées (151, 152) permettant d'établir sélectivement la liaison fluidique avec l'une ou l'autre desdites deuxième et troisième chambres, de façon à obtenir deux régimes de fonctionnement pour l'amortisseur, dont un régime normal dans lequel le deuxième piston séparateur (111) intervient seul et permet d'emmagasiner, à la descente du train, une certaine énergie qui est réutilisable lors du relevage subséquent dudit train, et un régime de secours dans lequel le premier piston séparateur (110) intervient seul et fait office de frein pour la descente secours du train.

2. Amortisseur selon la revendication 1, caractérisé par le fait que les premier et deuxième pistons séparateurs (110 ; 111) sont, en position de repos, en appui, par l'intermédiaire de saillies d'espacement (114 ; 131), sur la cloison intermédiaire correspondante (107 ; 116) du corps principal (101).

3. Amortisseur selon la revendication 1 ou 2, caractérisé par le fait que les moyens de communication (150) comportent une canalisation (155) reliant un orifice d'extrémité (153) de la première chambre de fluide hydraulique (127) à un orifice d'extrémité (157) de la troisième chambre de fluide hydraulique (109.1), lesdits orifices débouchant au voisinage des cloisons intermédiaires (107 ; 116) du corps principal (101), et une première électro-vanne associée (151) qui est ouverte lors du régime normal de fonctionnement dudit amortisseur, l'autre électro-vanne (152) étant alors fermée.

4. Amortisseur selon l'une des revendications 1 à 3, caractérisé par le fait que les moyens de communication (150) comportent en outre une canalisation (162) reliant au moins un orifice d'extrémité (158, 160) de la première chambre de fluide hydraulique (127) à un orifice d'extrémité (163) de la deuxième chambre de fluide hydraulique (108.1), lesdits orifices débouchant au voisinage de la cloison intermédiaire correspondante (107) du corps principal (101), et une deuxième électro-vanne (152) qui est ouverte lors du régime de secours dudit amortisseur, l'autre électro-vanne (151) étant alors fermée.

5. Amortisseur selon la revendication 4, caractérisé par le fait que la canalisation (162) est associée à deux orifices étagés (158, 160) de la première chambre de fluide hydraulique (127), celui (160) desdits orifices qui est le plus proche de la cloison intermédiaire (107) étant associé à un diaphragme (161) d'amortissement de fin de course pour le freinage final de la descente secours du train.

6. Amortisseur selon l'une des revendications 1 à 5, caractérisé en ce que les moyens de communication (150) sont agencés à l'extérieur du corps principal (101).

7. Amortisseur selon l'une des revendications 1 à 6, caractérisé en ce que la tige-piston (103) est creuse, et son guidage axial est assuré par un collet glissant (128) associé à la portion piston (123) de ladite tige-piston, ladite portion piston présentant des perçages axiaux (124) assurant le libre passage du fluide hydraulique de part et d'autre de celle-ci.

8. Amortisseur selon l'une des revendications 1 à 7, caractérisé en ce qu'il est articulé (en 104) par sa tige-piston (103) sur le train d'atterrissage, et par son corps principal (101) sur le point fixe (51) de la structure d'avion.
